# EUROPÄISCHE PATENTSCHRIFT

(11) **EP 1 251 059 B1**
(45) Veröffentlichungstag und Bekanntmachung des Hinweises auf die Patenterteilung: **03.11.2004**
(21) Anmeldenummer: 02008189.9
(22) Anmeldetag: 16.04.2002
(51) Int. Cl.: B62D 5/06

(54) **Verfahren zum Steuern eines Servolenksystems**
Control method for a power-assisted steering system
Procédé de commande d'un système de direction assistée

(30) Priorität: 17.04.2001 DE 10118739
(43) Veröffentlichungstag der Anmeldung: 23.10.2002
(73) Patentinhaber: TRW Automotive GmbH, 73553 Alfdorf (DE)
(72) Erfinder: Grebe, Kai, 53721 Siegburg (DE); Gessat, Jochen, 50321 Brühl (DE); Wienecke, Ulrich, 52074 Aachen (DE)
(74) Vertreter: Sties, Jochen, Dipl.-Ing.

(56) Entgegenhaltungen:
- EP-A- 0 962 377
- DE-A- 19 713 576
- US-A- 5 314 036

## Beschreibung

Die Erfindung betrifft ein Verfahren zum Steuern eines Servolenksystems.

Ein solches Servolenksystem weist üblicherweise ein Verstellgetriebe auf, das über ein Lenkgestänge mindestens ein Fahrzeugrad verschwenken kann, ein Lenkrad, das mit dem Verstellgetriebe gekoppelt ist und einen Sollwert für die Lenkrichtung vorgibt, sowie ein Antriebsmittel zum Bereitstellen einer Lenkunterstützung, damit das zum Verstellen des Fahrzeugrades erforderliche, auf das Lenkrad aufzubringende Drehmoment verringert wird. Bei einer hydraulischen Servolenkung ist als Antriebsmittel üblicherweise eine Servopumpe vorgesehen, die von einem Elektromotor angetrieben wird und einen Hydraulikölstrom bereitstellt. Ein solches System ist aus EP 0 962 377 A2 bekannt.

Um zu verhindern, daß das Verstellgetriebe bei vollem Lenkausschlag mit großer Geschwindigkeit gegen einen Endanschlag fährt, überwacht das bekannte System dessen Stellung und begrenzt die Geschwindigkeit des Elektromotors, wenn das Verstellgetriebe sehr nahe oder unmittelbar an einen Anschlag ist.

DE 197 13 576 A1 offenbart ein Servolenksystem, bei dem ein unterstützendes. Moment eines Servomotors einer Lenkraddrehung in einem Überlangerungsgetriebe überlagert wird, um ein Lenkgetriebe anzusteuern. Auch hier wird die Lenkunterstützung durch den Servomotor vor Erreichen eines Lenkanschlags reduziert, um zu verhindern, daßein von dem Servomotor bei Erreichen des Lenkanschlags ausgeübtes Drehmoment vom Fahrer als seiner Lenkkraft entgegengesetztes Moment am Lenkrad gefühlt wird.

Die Aufgabe der Erfindung besteht darin, ein Verfahren zum Steuern eines Servolenksystems zu schaffen, bei dem mit geringem Aufwand verhindert werden kann, daß das Verstellgetriebe mit hoher Lenkunterstützungskraft in eine Endlage fährt.

Die Aufgabe wird gelöst durch ein Verfahren mit den Merkmalen des Anspruchs 1.

Gemäß einer Ausführungsform der Erfindung ist vorgesehen, daß der Positionssensor die Absolutstellung des Verstellgetriebes erfaßt. Geeignete Sensoren für das Verstellgetriebe, welche die absolute Winkellage erfassen, sind bekannt und werden bereits für andere Funktionen verwendet, beispielsweise für elektronische Stabilitätskontrollsysteme. Es ist also kein zusätzlicher Bauaufwand erforderlich. Alternativ kann vorgesehen sein, daß der Positionssensor den Abstand von einer Endlage erfaßt. Hierfür sind einfachere mechanische Sensoren ausreichend.

Falls das Antriebsmittel eine Servopumpe ist, die von einem Elektromotor angetrieben wird, wird vorzugsweise die Drehzahl des Elektromotors heruntergeregelt, wenn erfaßt wird, daß sich das Verstellgetriebe einer Endlage nähert. Falls das Antriebsmittel ein Elektromotor ist, der direkt mit dem Verstellgetriebe gekoppelt ist, wird vorzugsweise das Lenkunter-stützungsmoment des Elektromotors heruntergeregelt, wenn erfaßt wird, daß sich das Verstellgetriebe einer Endlage nähert.

Vorteilhafte Ausgestaltungen der Erfindung ergeben sich aus den Unteransprüchen.

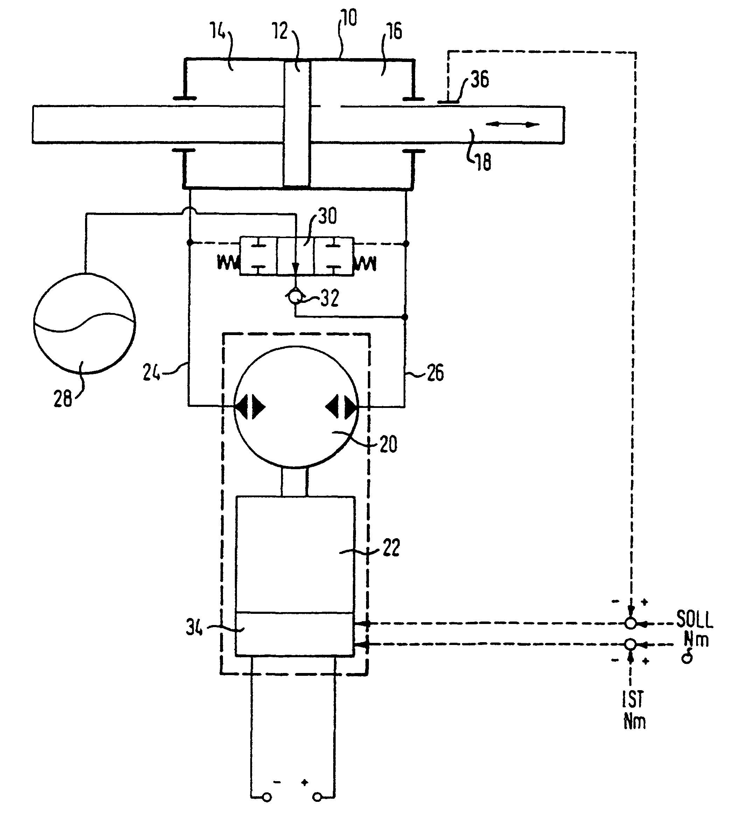

Die Erfindung wird nachfolgend anhand einer bevorzugten Ausführungsform beschrieben, die in der beigefügten einzigen Figur dargestellt ist. In dieser ist schematisch ein erfindungsgemäßes Lenksystem gezeigt, das hier als elektro-hydraulisches Lenksystem ohne mechanische Verbindung zwischen dem Lenkrad und den Fahrzeugrädern ausgeführt ist. Die Erfindung kann aber in gleicher Weise bei Lenksystemen verwendet werden, die ein mechanisches Lenkgetriebe und zusätzlich ein elektrisches oder elektro-hydraulisches Servounterstützungssystem aufweisen.

Das elektro-hydraulische Lenksystem enthält als Verstellgetriebe einen Servozylinder 10 mit einem Kolben 12, der das Innere des Zylinders in zwei Kammern 14, 16 unterteilt. Durch Druckbeaufschlagung der einen oder der anderen der beiden Kammern kann der Kolben 12 und somit eine mit ihm verbundene Kolbenstange 18 verstellt werden. Die Kolbenstange 18 ist mit (in der Figur nicht dargestellten) lenkbaren Fahrzeugrädern verbunden, so daß durch Verstellung des Kolbens 12 im Servozylinder 10 eine Lenkunterstützungskraft zu den Fahrzeugrädern übertragen werden kann.

Es ist als Antriebsmittel eine Servopumpe 20 vorgesehen, die von einem Elektromotor 22 angetrieben wird. Die Servopumpe 20 kann in zwei Förderrichtungen betrieben werden. Eine Seite der Pumpe 20 ist durch eine Druckleitung 24 mit der ersten Kammer 14 des Servozylinders 10 verbunden, und die andere Seite der Pumpe 22 ist durch eine Druckleitung 26 mit der zweiten Kammer 16 verbunden. Auf diese Weise ist ein abgeschlossenes System gebildet, das mit einem Hydraulikfluid gefüllt ist.

Es ist ein Hydraulikspeicher 28 vorgesehen, der mit Hydraulikfluid gefüllt ist, das unter einem Druck steht, der etwa der Hälfte des maximalen Hydraulikdrucks in dem Hydrauliksystem entspricht, das gebildet ist aus den beiden Kammern 14, 16, den beiden Druckleitungen 24, 26 und der Servopumpe 20. Der Speicher 28 steht über ein Ladeventil 30 und ein Rückschlagventil 32 mit dem Hydrauliksystem in Verbindung, so daß dieses auf dem Druck gehalten wird, der im Speicher 28 vorliegt.

Der Elektromotor 22 wird von einer elektronischen Steuereinheit 34 gesteuert. Der Steuereinheit 34 werden Sollwerte für den Lenkwinkel und das Lenkmoment sowie der Istwert des Lenkmomentes und des Lenkwinkels zugeführt. Zu diesem Zweck ist ein (in der Figur nicht dargestellter) Lenkradsensor vorgesehen. Ferner wird der Steuereinheit 34 ein Parameter bereitgestellt, der dem Lenkwinkel oder dem Weg des Servozylinders entspricht. Zu diesem Zweck ist ein Positionssensor 36 vorgesehen, der hier die absolute Stellung des Verstellgetriebes erfaßt. Falls ein Lenksystem mit starrer mechanischer Kopplung zwischen Lenkrad und Lenkgetriebe verwendet wird, kann alternativ auch direkt die absolute Winkelstellung des Lenkrades durch einen Lenkwinkelsensor erfaßt werden.

Das Lenksystem arbeitet in der folgenden Weise: Wenn die Steuereinheit 34 erkennt, daß eine Lenkunterstützung bereitgestellt werden muß, beispielsweise anhand des Sollwertes für den Lenkwinkel, der an einem Fahrzeuglenkrad erfaßt werden kann, oder anhand der Differenz zwischen dem Sollwert und dem Istwert für das Lenkmoment, wird die Servopumpe 20 in der entsprechenden Richtung betrieben, um die eine oder andere der beiden Kammern 14, 16 geeignet mit Druck zu beaufschlagen. Dieser Druck steht unmittelbar zur Verfügung, da das Hydrauliksystem vom Speicher 28 vorgespannt ist; die Servopumpe 20 muß also nicht unmittelbar nach dem Anlaufen erst einen Systemdruck aufbauen. Sobald die Steuereinheit 34 erkennt, daß keine weitere Lenkunterstützung erforderlich ist, wird der Elektromotor 22 wieder abgeschaltet, so daß die Servopumpe 20 stillsteht. Auf diese Weise wird eine Antriebsenergie für das Lenksystem nur dann benötigt, wenn auch eine Lenkkraftunterstützung benötigt wird. Weiterhin sind keine komplizierten mechanischen Bauteile erforderlich, um den von der Servopumpe bereitgestellten Volumenstrom den Kammern 14, 16 zuzuführen, da dieser Volumenstrom unmittelbar von der Pumpe in der richtigen Größe und der richtigen Richtung bereitgestellt wird.

Die Steuereinheit überprüft anhand des Positionssensors 36 in regelmäßigen Zeitabständen, ob sich der Servozylinder 10 einer Endlage nähert, also sich der Kolben 12 der Stirnwand einer der Kammern 14, 16 nähert. Falls ein solcher Zustand erfaßt wird, wird der Elektromotor 22 von der Steuereinheit so heruntergeregelt, daß die Servopumpe eine abnehmende Lenkunterstützung bereitstellt. Vorzugsweise sinkt die Lenkunterstützung auf Null ab, kurz bevor die Endlage erreicht ist.

Durch Auswerten der Verstellgeschwindigkeit des Kolbens im Servozylinder wird festgestellt, mit welcher Geschwindigkeit sich der Kolben einer Endlage nähert. Wenn sich der Kolben der Endlage mit hoher Geschwindkeit nähert, muß die Lenkunterstützung vergleichsweise abrupt verringert werden. Falls sich der Kolben der Endlage mit niedriger Geschwindigkeit nähert, kann die Lenkunterstützung vergleichsweise sanft verringert werden, so daß eine komfortable Endlagendämpfung erreicht wird.

## Patentansprüche

1. Verfahren zum Steuern eines Servolenksystems, das ein Verstellgetriebe (10) zum Verstellen mindestens eines Fahrzeugrades, ein Antriebsmittel (20, 22) zum Bereitstellen einer Lenkunterstützung, ein Lenkrad und einen Positionssensor (36) aufweist, wobei die folgenden Schritte durchgeführt werden:
- es wird bestimmt, ob sich das Verstellgetriebe (10) einer Endlage nähert;
- falls festgestellt wird, daß sich das Verstellgetriebe (10) der Endlage nähert, wird das Antriebsmittel (20, 22) so gesteuert, daß es eine abnehmende Lenkunterstützung bereitstellt, wobei die Geschwindigkeit, mit der die Lenkunterstützung abnimmt, anhand der durch Abfragen der vom Positionssensor (36) ermittelten Verstellgeschwindigkeit ermittelten Geschwindigkeit, mit der sich das VerstelIgetriebe (10) der Endlage nähert, festgelegt wird.

2. Verfahren nach Anspruch 1, **dadurch gekennzeichnet, daß** der Positionssensor (36) die Absolutstellung des Verstellgetriebes erfaßt.

3. Verfahren nach Anspruch 1, **dadurch gekennzeichnet, daß** der Positionssensor (36) die Annäherung des Verstellgetriebes (10) an eine Endlage erfaßt.

4. Verfahren nach einem der Ansprüche 1 bis 3, **dadurch gekennzeichnet, daß** das Antriebsmittel eine Servopumpe (20) ist, die von einem Elektromotor (22) angetrieben wird, und daß die Drehzahl des Elektromotors (22) heruntergeregelt wird, wenn erfaßt wird, daß sich das Verstellgetriebe (10) einer Endlage nähert.

5. Verfahren nach einem der Ansprüche 1 bis 3, **dadurch gekennzeichnet, daß** das Antriebsmittel ein Elektromotor ist, der direkt mit dem Verstellgetriebe gekoppelt ist, und daß das Lenkunterstützungsmoment des Elektromotors heruntergeregelt wird, wenn erfaßt wird, daß sich das Verstellgetriebe einer Endlage nähert.

## Claims

1. A method of controlling a power steering system having an adjusting mechanism (10) for adjusting at least one vehicle wheel, a drive means (20, 22) to provide steering assistance, a steering wheel, and a position sensor (36), the following steps being carried out:
- it is determined whether the adjusting mechanism (10) is approaching an end position;
- if it is found that the adjusting mechanism (10) is approaching the end position, then the drive means (20, 22) is controlled in such a way that it provides a diminishing steering assistance, the speed at which the steering assistance diminishes being set on the basis of the speed at which the adjusting mechanism (10) is approaching the end position, which is determined by polling the adjustment speed determined by the position sensor (36).

2. The method according to Claim 1, **characterized in that** the position sensor (36) detects the absolute position of the adjusting mechanism.

3. The method according to Claim 1, **characterized in that** the position sensor (36) detects if and when the adjusting mechanism (10) is approaching an end position.

4. The method according to any of Claims 1 to 3, **characterized in that** the drive means is a servo pump (20) that is driven by an electric motor (22), and that the rotational speed of the electric motor (22) is regulated down when it is detected that the adjusting mechanism (10) is approaching an end position.

5. The method according to any of Claims 1 to 3, **characterized in that** the drive means is an electric motor that is directly coupled to the adjusting mechanism, and that the steering assistance torque of the electric motor is regulated down when it is detected that the adjusting mechanism is approaching an end position.

## Revendications

1. Procédé de commande d'un système de direction assistée, qui présente un mécanisme de réglage (10) pour pivoter au moins une roue de véhicule, un moyen d'entraînement (20, 22) pour fournir une assistance de direction, un volant de direction et un capteur de position (36), dans lequel sont effectuées les étapes suivantes :
- on détermine si le mécanisme de réglage (10) s'approche d'une position extrême ;
- au cas où l'on constate que le mécanisme de réglage (10) s'approche d'une position d'extrémité, le moyen d'entraînement (20, 22) est commandé de telle sorte qu'il fournit une assistance de direction décroissante, la vitesse avec laquelle l'assistance de direction décroît étant spécifiée à l'aide de la vitesse déterminée, à laquelle le mécanisme de réglage (10) s'approche de la position extrême, par interrogation de la vitesse de réglage déterminée par le capteur de position (36).

2. Procédé selon la revendication 1, **caractérisé en ce que** le capteur de position (36) détecte la position absolue du mécanisme de réglage.

3. Procédé selon la revendication 1, **caractérisé en ce que** le capteur de position (36) détecte l'approche d'une position extrême par le mécanisme de réglage (10).

4. Procédé selon l'une des revendications 1 à 3, **caractérisé en ce que** le moyen d'entraînement est une servopompe (20) qui est entraînée par un moteur électrique (22), et **en ce que** le régime du moteur électrique (10) est réglé vers le bas lorsqu'il est détecté que le mécanisme de réglage (10) s'approche d'une position extrême.

5. Procédé selon l'une des revendications 1 à 3, **caractérisé en ce que** le moyen d'entraînement est un moteur électrique qui est directement accouplé au mécanisme de réglage, et **en ce que** le couple d'assistance de direction du moteur électrique est réglé vers le bas lorsqu'il est détecté que le mécanisme de réglage (10) s'approche d'une position extrême.
